## Europäisches Patentamt
## European Patent Office
## Office européen des brevets

(11) Publication number: **0 194 797**
**B1**

(12) **EUROPEAN PATENT SPECIFICATION**

(45) Date of publication of patent specification: **13.12.89**

(51) Int. Cl.⁴: **G 21 C 3/06, B 32 B 15/01**

(21) Application number: **86301529.3**

(22) Date of filing: **04.03.86**

(54) Water reactor fuel element cladding tube.

(30) Priority: **08.03.85 US 709851**

(43) Date of publication of application:
**17.09.86 Bulletin 86/38**

(45) Publication of the grant of the patent:
**13.12.89 Bulletin 89/50**

(84) Designated Contracting States:
**BE DE FR GB IT SE**

(56) References cited:
**EP-A-0 121 204**
**DE-A-1 589 458**
**DE-A-3 310 054**
**GB-A-2 119 559**
**US-A-3 620 691**

(73) Proprietor: **WESTINGHOUSE ELECTRIC CORPORATION**
**Westinghouse Building Gateway Center**
**Pittsburgh Pennsylvania 15235 (US)**

(72) Inventor: **Foster, John Paul**
**200 Londonderry Court**
**Monroeville Pennsylvania (US)**

(74) Representative: **van Berlyn, Ronald Gilbert**
**23, Centre Heights**
**London, NW3 6JG (GB)**

Courier Press, Leamington Spa, England.

## Description

This invention relates to water reactor fuel element cladding tubes composed of zirconium base alloys for use in pressurized water and boiling water reactors. It is especially concerned with fuel cladding having properties which minimize the adverse effects of pellet-clad interaction (PCI) in water reactor fuel elements.

The use of cladding tubes made entirely of a high zirconium alloy has been the practice in the water reactor industry. Examples of common alloys used are Zircaloy-2, and Zircaloy-4. These alloys were selected based on their nuclear properties, mechanical properties and high-temperature aqueous-corrosion resistance.

The history of the development of Zircaloy-2 and 4, and the abandonment of Zircaloy-1 and 3 is summarized in: Stanley Kass, "The Development of the Zircaloys," published in ASTM Special Technical Publication No. 368 (1964) pp. 3—27. Also of interest with respect to Zircaloy development are U.S. Patent Specification Nos. 2,772,964; 3,097,094; and 3,148,055.

Most commercial chemistry specifications for Zircaloy-2 and 4 conform essentially with the requirements published in ASTM B350-80, (for alloy UNS No. R60802 and R60804, respectively) for example. In addition to these requirements the oxygen content for these alloys is required to be between 900 to 1600 ppm but typically is about 1200±200 ppm for fuel cladding applications.

It has been a common practice to manufacture Zircaloy cladding tubes by a fabrication process involving: hot working an ingot to an intermediate size billet or log; beta solution treating the billet; machining a hollow billet; high temperature alpha extruding the hollow billet to a hollow cylindrical extrusion; and then reducing the extrusion to substantially final size cladding through a number of cold pilger reduction passes, having an alpha recrystallization anneal prior to each pass. The cold worked, substantially final size cladding is then final annealed. This final anneal may be a stress relief anneal, partial recrystallization anneal or full recrystallization anneal. The type of final anneal provided, is selected based on the designer's specification for the mechanical properties of the fuel cladding.

One problem that has occurred in the use of fuel rods utilizing the aforementioned cladding has been the observation of cracks emanating from the interior surface of the cladding which is placed under additional stress by contact with a fractured, thermally expanding oxide fuel pellet. These cracks sometimes propagate through the wall thickness of the cladding destroying the integrity of the fuel rod and thereby allowing coolant into the rod and radioactive fission products to contaminate primary coolant circulating through the reactor core. This cracking phenomena, is generally believed to be caused by the interaction of irradiation hardening, mechanical stress and fission products, producing an environment conductive to crack initiation and propagation in zirconium alloys.

Zircaloy fuel cladding tubes having a zirconium layer bonded to their inside surface have been proposed as being resistant to the propagation of cracks initiated at the interface between the fuel pellet and cladding during water reactor operation. Examples of these proposals are provided by United States Patent Specification Nos. 4,045,288; 4,372,817; 4,200,492; 4,390,497 and GB—A—2104711.

The zirconium liners of the foregoing patents have been selected because of their resistance to PCI crack propagation without consideration of their resistance to aqueous corrosion. If the cladding should breach in the reactor, allowing coolant inside the cladding, it is expected that the aqueous corrosion resistance of the liner will be vastly inferior to that of the high zirconium alloy making up the bulk of the cladding. Under these conditions the liner would be expected to completely oxidize thereby becoming useless, relatively rapidly, while leading to increase hydride formation in the zirconium alloy portion of the cladding, thereby compromising the structural integrity of the zirconium alloy. This degradation of the cladding could lead to gross failure with significantly higher release of uranium and radioactive species to the coolant.

The art has sought to address this aqueous corrosion resistance problem by burying the zirconium layer of the aforementioned patents between layers of conventional zirconium alloys having high aqueous corrosion resistance or by substituting a dilute zirconium alloy for the internally exposed zirconium layer. Examples of these designs are described in United Kingdom Patent Specification GB—A—2,119,559. Despite these efforts there continues to be a need for a water reactor fuel cladding having the excellent aqueous corrosion resistance of conventional zirconium alloys on both its inside diameter and outside diameter surfaces, while having improved PCI crack propagation resistance, compared to the conventional Zircaloy-2 and Zircaloy-4 fuel claddings.

Accordingly, the present invention resides in a water reactor fuel element cladding tube comprising an outer cylindrical layer of a first zirconium alloy having high strength and excellent aqueous corrosion resistance and consisting of Zircaloy-2 or Zircaloy-4, and having metallurgically bonded thereto an inner cylindrical layer of a second zirconium alloy, characterized in that said second alloy consists essentially of, from 0.4 to 0.6 wt% tin, from 0.5 to 1.5 wt% iron, from 100 to 700 ppm oxygen, and the balance zirconium.

A tubular fuel element cladding tube is thus provided having excellent aqueous corrosion resistance on both its outside and inside diameter surfaces, as well as improved PCI crack propagation resistance compared to conventional Zircaloy-2 and Zircaloy-4 fuel claddings. Preferably, the zirconium alloy of the outer cylindrical layer is either Zircaloy-2 or Zircaloy-4. Preferably the tin content of the inner cylindrical layer is held at from 0.4 to 0.5 wt%, and the iron content at from 0.5 to 1.0 wt%.

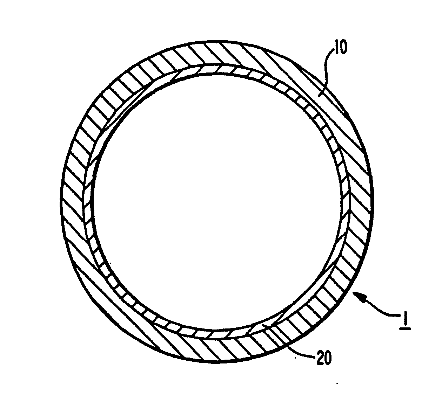

In order that the invention can be more clearly understood, a convenient embodiment thereof will now be described, by way of example, with reference to the accompanying drawing which is a transverse cross section through an elongated fuel cladding tube.

Referring to the drawing a composite fuel cladding tube 1 is provided having two concentric layers, each layer 10 is composed of a high strength zirconium base alloy known for its excellent corrosion resistance in aqueous environments. The first alloy is preferably composed of either Zircaloy-2 or Zircaloy-4. The Zircaloy-2 or 4 utilized preferably conforms to the chemistry requirements published in ASTM B350-80 Table for UNS 60802 (Zircaloy-2) or UNS 60804 (Zircaloy-4). In addition the oxygen content of these alloys should be from 900 to 1600 ppm.

Metallurgically bonded to, and located within the outer layer 10 is a second cylindrical layer 20 composed of an alloy having essentially the composition shown in Table I below.

TABLE I
Composition of inner layer

| | Broad composition | Preferred composition |
|---|---|---|
| Sn | 0.4—0.6 wt.% | 0.4—0.5 wt.% |
| Fe | 0.5—1.4 wt.% | 0.5—1.0 wt.% |
| O | 100—700 ppm | 100—500 ppm |
| Zr | Balance | Balance |

This inner layer 20 has been provided to give the fuel cladding tube improved resistance to the propagation of PCI related cracks in pile. It is submitted that at the level specified that the iron and tin act to provide enhanced aqueous corrosion resistance to the present alloy. It is further submitted that the high levels of iron utilized, contrary to what would be generally believed by those of ordinary skill in the art, will not have a significant adverse effect on the PCI resistance of the liner and may in fact result in an improvement in PCI resistance. Preferably the tin is held at 0.4 to 0.5 wt.% and the iron at 0.5 to 1.0 wt.% to provide an optimum combination of aqueous corrosion resistance and PCI evade propagation resistance.

Increasing oxygen, increases the hardness of the inner layer alloy and is believed to adversely affect the ability of the layer to resist PCI crack propagation in pile. Oxygen is therefore kept at from 100 to 700 ppm. Preferably, oxygen is from 100 to 500 ppm. The lower limit on oxygen has been selected on the basis that any further improvement in PCI performance obtained by decreasing oxygen further, is believed to be limited and therefore cannot be justified in view of the significant additional costs involved in further reducing the oxygen content.

While it has been noted that the total impurities in the inner layer are maintained below 2000 ppm, it is preferred that it be below 1500 ppm and that individual impurity contents be within the maximum limits specified by ASTM B350-80 Table UNS 60001, where applicable. ASTM B353-77a, in its entirety, is hereby incorporated by reference. Electron beam melting of the zirconium starting material to be used in making the inner layer alloy, may be performed to reduce total impurity content.

The thickness of inner layer 20 is less than the thickness of the outer layer 10, and is preferably from 0,051 to 0,1524 mm (0.002 to 0.006 inches) and is more preferably from 0,076 to about 0,1016 mm (0.003 to about 0.004 inches) thick. The outer layer 20 forms the bulk of the cladding and provides the cladding with its required mechanical properties. The required thickness of this outer layer may thus be determined by conventional procedures used by those of ordinary skill in the art of nuclear fuel element design. Complete metallurgical bonding between the inner and outer layer is preferably obtained by a combination of hot working, annealing, and cold working steps.

The invention will now be illustrated with reference to the following Example:

Melt an alloy having the nominal composition shown in Table II by consumable electrode vacuum arc melting the required alloying additions with commercially available zirconium. Arc melting is preferably performed at least twice.

It should be understood that the cladding chemistry requirements set forth in this application may be met by performing chemical analyses at the ingot stage of manufacture for alloying elements and impurities, and subsequently, at an intermediate stage of manufacture, such as near the co-extrusion stage, for the interstitial elements, oxygen, hydrogen and nitrogen. Chemical analysis of the final size cladding is not required.

TABLE II
Nominal composition of inner layer material

| | |
|---|---|
| Sn | 0.45 wt% |
| Fe | 0.5 wt% |
| O | 100 ppm |
| Zr | remainder, with incidental impurities |

Preferably fabricate the resulting ingot by conventional Zircaloy primary fabrication techniques, including a beta solution treatment step, into tubular starting components for the inner layer. Tubular Zircaloy starting components for the outer layer are conventionally fabricated from ingots meeting the requirements of ASTM B350-80 for grade R60802 or R60804 and having an oxygen content between about 900 and 1600 ppm. These tubular starting components, for both the inner and outer layers, may have a cold worked, hot worked, alpha annealed, or beta quenched microstructure.

The inside diameter surface of the outer layer starting component, as well as the outside diameter surface of the inner layer starting component are then machined to size, such that the clearance between the components when nested inside of each other is minimized. After machining, the components are cleaned to remove, as nearly as possible, all surface contamination from the surfaces to be bonded. The components are then nested inside of each other, and the annulus formed at the interface of the adjacent components is vacuum electron beam welded shut, such that a vacuum is maintained in the annulus after welding boths ends of the nested components.

At this stage, the unbonded tube shell assembly is ready to be processed according to the known extrusion, cold pilgering and annealing processes utilized to fabricate cladding tubes made completely of Zircaloy. Conventional Zircaloy lubricants, cleaning, straightening, and surface finishing techniques may be used in conjunction with any of the processes, both conventional and new, described in copending application United States Patent Application Serial Nos. 343,788 and 343,787 both filed on January 29, 1982, and U.S. Patent No. 4,450,016. All of the foregoing fabrication processes will result in complete and continuous metallurgical bonding of the layers, except for minor, insignificant areas of unavoidable bond-line contamination.

Beta treatment, either by laser or induction heating, while not required to practice the present invention is preferred. When used, such treatment would be performed preferably as a surface treatment (as described in EP—A—85552) either between the next to last and last cold pilgering passes or just prior to the next to last cold pilger pass preferably as a through wall beta treatment. After beta treatment all intermediate, as well as the final anneals, should be performed below 600°C and more preferably at or below 550°C. These low temperature anneals are used to preserve the enhanced corrosion resistance imparted by the beta surface treatment.

Most preferably, the aqueous corrosion resistance of the outer layer and inner layer are characterized by a grey or substantially black, adherent corrosion film and a weight gain of less than 200 mg/dm$^2$, and more preferably less than 100 mg/dm$^2$ after a 24-hour, 500°C, 103,41×10$^5$ Pa (1500 psi) steam test.

Whether or not beta treatment has been used, the final anneal, after the final cold pilgering pass, is one in which the zirconium alloy inner layer is stress relieved (i.e. without significant recrystallization), partially recrystallized, or fully recrystallized. Where a full recrystallization final anneal is performed the resulting average grain size is no larger than 1/4, and more preferably between 1/10 and 1/30, the inner layer wall thickness. The Zircaloy outer layer has been at least stress relief annealed. After the final anneal, conventional Zircaloy tube cleaning, straightening, and finishing steps are performed.

The lined cladding is subsequently loaded with fissile fuel material. Preferably the fuel material used is in the form of cylindrical pellets and may have chamferred edges and/or concavedly dished ends. Preferably these pellets are composed of UO$_2$ and are about 95% dense. The uranium in these pellets may be enriched or natural uranium and may also contain a burnable absorber such as a gadolinium oxide as a boron containing material. The resulting fuel element may be one of any of the known commercial pressurized water or boiling water reactor designs, preferably containing pressurized helium within the sealed fuel rod.

## Claims

1. A water reactor fuel element cladding tube comprising an outer cylindrical layer (10) of a first zirconium alloy having high strength and excellent aqueous corrosion resistance and consisting of Zircaloy-2 or Zircaloy-4, and having metallurgically bonded thereto an inner cylindrical layer (20) of a second zirconium alloy, characterized in that said second alloy consists essentially of, from 0.4 to 0.6 wt% tin, from 0.5 to 1.4 wt% iron, from 100 to 700 ppm oxygen, and the balance zirconium.

2. A cladding tube according to claim 1, characterized in that the second alloy contains from 0.4 to 0.5 wt% tin.

3. A cladding tube according to claim 1 or 2, characterized in that the second alloy contains from 0.5 to 1.0 wt% iron.

4. A cladding tube according to claim 1, 2 or 3, characterized in that the second alloy contains from 100 to 500 ppm oxygen.

5. A cladding tube according to any of claims 1 to 4, characterized in that the second alloy has a cold worked and stress relieved microstructure.

6. A cladding tube according to any of claims 1 to 4, characterized in that the second alloy has a partially recrystallized microstructure.

7. A cladding tube according to any of claims 1 to 4, characterized in that the second alloy has a fully recrystallized microstructure.

## Patentansprüche

1. Ein Mantelrohr für ein Brennelement eines wassergekühlten Reaktors, bestehend aus einer äußeren zylindrischen Schicht (10) aus einer ersten Zirkonlegierung, die hohe Festigkeit und ausgezeichnete Wasserkorrosionswiderstandsfähigkeit aufweist und die aus Zircaloy-2 oder Zircaloy-4 besteht und an der eine innere zylindrische Schicht (20) einer zweiten Zirkonlegierung metallurgisch gebunden ist, dadurch gekennzeichnet, daß die zweite Legierung im wesentlichen aus 0,4 bis 0,6 Gew% Zinn, 0,5 bis 1,4 Gew% Eisen, 100 bis 700 ppm Sauerstoff, und Rest Zirkon besteht.

2. Ein Mantelrohr nach Anspruch 1, dadurch gekennzeichnet, daß die zweite Legierung 0,4 bis 0,5 Gew% Zinn enthält.

3. Ein Mantelrohr nach Anspruch 1 oder 2, dadurch gekennzeichnet, daß die zweite Legierung 0,5 bis 1,0 Gew% Eisen enthält.

4. Ein Mantelrohr nach Anspruch 1, 2 oder 3, dadurch gekennzeichnet, daß die zweite Legierung 100 bis 500 ppm Sauerstoff enthält.

5. Ein Mantelrohr nach einem der Ansprüche 1 bis 4, dadurch gekennzeichnet, daß die zweite Legierung eine kaltbearbeitete und streßgelöste Mikrostruktur aufweist.

6. Ein Mantelrohr nach einem der Ansprüche 1 bis 4, dadurch gekennzeichnet, daß die zweite Legierung eine teilweise rekristallisierte Mikrostruktur aufweist.

7. Ein Mantelrohr nach einem der Ansprüche 1 bis 4, dadurch gekennzeichnet, daß die zweite Legierung eine voll rekristallisierte Mikrostruktur aufweist.

## Revendications

1. Tube de gainage pour crayon combustible de réacteur refroidi à l'eau pressurisée, comprenant une couche cylindrique extérieure (10) d'un premier alliage de zirconium présentant une grande solidité et une excellente résistance à la corrosion aqueuse, ce premier alliage étant constitué par du Zircaloy-2 ou du Zircaloy-4 et comportant, collé métallurgiquement à celui-ci, une couche cylindrique intérieure (20) d'un second alliage de zirconium, tube de gainage caractérisé en ce que le second alliage est constitué essentiellement de 0,4 à 0,6% en poids d'étain, de 0,5 à 1,4% en poids de fer, et de 100 à 700 ppm d'oxygène, le complément à 100% étant constitué par du zirconium.

2. Tube de gainage selon la revendication 1, caractérisé en ce que le second alliage contient de 0,4 à 0,5% en poids d'étain.

3. Tube de gainage selon l'une quelconque des revendications 1 et 2, caractérisé en ce que le second alliage contient de 0,5 à 1% en poids de fer.

4. Tube de gainage selon l'une quelconque des revendications 1 à 3, caractérisé en ce que le second alliage contient de 100 à 500 ppm d'oxygène.

5. Tube de gainage selon l'une quelconque des revendications 1 à 4, caractérisé en ce que le second alliage présente une microstructure travaillée à froid et libérée des contraintes.

6. Tube de gainage selon l'une quelconque des revendications 1 à 4, caractérisé en ce que le second alliage présente une microstructure partiellement recristallisée.

7. Tube de gainage selon l'une quelconque des revendications 1 à 4, caractérisé en ce que le second alliage présente une microstructure complètement recristallisée.